# EUROPEAN PATENT APPLICATION

(11) **EP 4 797 101 A1**
(43) Date of publication of application: **26.08.2026**
(21) Application number: 24892760.0
(22) Date of filing: 17.06.2024
(51) Int. Cl.: G06F 11/36

(54) **METHOD AND APPARATUS FOR BATCH GENERATION OF TEST CASES AND COMPUTING DEVICE**

(30) Priority: 20.11.2023 CN 202311554894; 22.12.2023 CN 202311790614
(71) Applicant: Huawei Cloud Computing Technologies Co., Ltd., Gui'an New District, Guizhou 550025 (CN)
(72) Inventor: ZHANG, Lin, Guiyang, Guizhou 550025 (CN); CAI, Xingpeng, Guiyang, Guizhou 550025 (CN); CAO, Shuo, Guiyang, Guizhou 550025 (CN)
(74) Representative: Grünecker Patent- und Rechtsanwälte PartG mbB
(86) International application number: PCT/CN2024/099585
(87) International publication number: WO 2025/107595

(57) **Abstract**

This application provides a method and an apparatus for batch generation of test cases, and a compute device. The method includes: obtaining a to-be-tested function of a target software product; obtaining an action factor and a data factor that correspond to the to-be-tested function, where the action factor is used to describe at least one of the following information in a test case: a prerequisite, a test step, and an expected result, and the data factor includes at least one test input parameter corresponding to the to-be-tested function and a plurality of values of each test input parameter; combining a plurality of values of the at least one test input parameter to obtain a plurality of data combination results; generating a plurality of corresponding test cases in batches based on the action factor and the plurality of data combination results; and displaying the plurality of generated test cases to a user. According to the method, test case generation efficiency can be improved, and omissions in testing can be avoided.

## Description

This application claims priorities to Chinese Patent Application No. 202311554894.4, filed with the China National Intellectual Property Administration on November 20, 2023 and entitled "PROCESSING FRAMEWORK AND METHOD FOR DOWNGRADE TRAINING", and to Chinese Patent Application No. 202311790614.X, filed with the China National Intellectual Property Administration on December 22, 2023 and entitled "METHOD AND APPARATUS FOR BATCH GENERATION OF TEST CASES, AND COMPUTE DEVICE", both of which are incorporated herein by reference in their entireties.

### TECHNICAL FIELD

This application relates to the field of software testing, and more specifically, to a method and an apparatus for batch generation of test cases, and a compute device.

### BACKGROUND

A test case describes a test task for a specific software product and reflects a test scheme, method, technology, and policy. The test case includes a test objective, a test environment, input data, a test step, an expected result, a test script, and the like, which are eventually formed into a document. The test case mainly includes four parts: a case title, a prerequisite, a test step, and an expected result. The case title mainly describes a to-be-tested function. The prerequisite is a pre-step for executing the test case. The test step mainly describes an operation step during the execution of the test case, which mainly helps test personnel know how to execute the test case. The expected result is a test result expected to be obtained after the execution of the test case, which is used to guide the test personnel in determining whether the test is passed.

With the development of science and technology, current product functions become increasingly complex, resulting in more the functions to be tested. How to ensure completeness of test cases and improve test case generation efficiency becomes urgent.

In a related test case generation scheme, the test personnel write test cases one by one based on personal experience. Manual operations by the test personnel are required in the test case generation process. The test personnel spend a lot of time in designing the test cases and cannot clearly express correlation between the test cases. As a result, test case generation efficiency is low. In addition, manual design is prone to omissions, leading to incomplete test coverage.

Therefore, how to improve test case generation efficiency becomes a technical problem that needs to be urgently resolved.

### SUMMARY

This application provides a method and an apparatus for batch generation of test cases, and a compute device. According to the method, test case generation efficiency can be improved, and missed testing in a test case design process can be avoided.

According to a first aspect, a method for batch generation of test cases is provided. The method includes: obtaining a to-be-tested function of a target software product; obtaining an action factor and a data factor that correspond to the to-be-tested function, where the action factor is used to describe at least one of the following information in a test case: a prerequisite, a test step, and an expected result, and the data factor includes at least one test input parameter corresponding to the to-be-tested function and a plurality of values of each test input parameter; combining a plurality of values of the at least one test input parameter to obtain a plurality of data combination results; generating a plurality of corresponding test cases in batches based on the action factor and the plurality of data combination results, where the plurality of test cases are used to test the to-be-tested function of the target software product; and displaying the plurality of generated test cases to a user.

In the foregoing technical solution, the plurality of corresponding test cases are generated in batches based on the action factor and the plurality of data combination results. In this way, test personnel (or referred to as users) can be prevented from repeatedly and manually writing test cases one by one for the to-be-tested function of the target software product, to significantly improve test case generation efficiency. In addition, the plurality of values of the at least one test input parameter are combined to obtain the plurality of data combination results, so as to avoid problems such as missed testing and incomplete testing due to experience of the test personnel, and enhance stability of a to-be-tested system.

With reference to the first aspect, in some implementations of the first aspect, the action factor and the data factor that correspond to the to-be-tested function are obtained from a test experience library.

In the foregoing technical solution, the action factor and the data factor are obtained from the test experience library, so that dependency on personal experience of the test personnel can be avoided, problems such as missed testing and incomplete testing can be reduced, and the stability of the to-be-tested system can be enhanced.

For example, the test experience library is a set of common test design objects, modes, assets, definitions, or constraints that are usually formed by a test manager and other owners by systematically summarizing and extracting related elements in a test design from forward and reverse perspectives. This ensures that the test design is more comprehensive and accurate. Test factors are common factors that affect the test process. For example, test conditions, values, and test operations are extracted as action factors and data factors to implement data and service steering. This promotes repeatability of the test design process, lowers test design difficulties, and greatly improves work efficiency.

With reference to the first aspect, in some implementations of the first aspect, the method further includes: obtaining user-defined information: weights of the values of the test input parameter in the plurality of data combination results, a weight of a value of a combination of a plurality of test input parameters in the plurality of data combination results, a constraint condition corresponding to the test input parameter, or association strength between a plurality of test input parameters; and combining the plurality of values of the at least one test input parameter based on at least one of the user-defined information, to obtain the plurality of data combination results.

In the foregoing technical solution, in the process of obtaining the plurality of data combination results, a definition and/or a constraint of the user on data may be further combined, so that a generated test case better fits an actual to-be-tested scenario.

With reference to the first aspect, in some implementations of the first aspect, the method further includes: obtaining a combination algorithm selected by the user; and combining the plurality of values of the at least one test input parameter based on the combination algorithm, to obtain the plurality of data combination results.

With reference to the first aspect, in some implementations of the first aspect, the combination algorithm includes at least one of the following: all combinations, an each choice combination, a basic choice combination, or a customized N-wise combination.

With reference to the first aspect, in some implementations of the first aspect, the plurality of test cases are generated based on a mind map.

In the foregoing technical solution, the test case is designed by using the mind map, so that a test design process performed by the test personnel is more intuitive and convenient, and test design efficiency is effectively improved.

With reference to the first aspect, in some implementations of the first aspect, the method is applied to a cloud management platform, the cloud management platform is configured to manage an infrastructure that provides a cloud service, the infrastructure includes at least one cloud data center, and at least one server is disposed in each cloud data center.

According to a second aspect, an apparatus for batch generation of test cases is provided. The apparatus includes an obtaining module, a combination module, a generation module, and a display module. The obtaining module is configured to obtain a to-be-tested function of a target software product. The obtaining module is further configured to obtain an action factor and a data factor that correspond to the to-be-tested function, where the action factor is used to describe at least one of the following information in a test case: a prerequisite, a test step, and an expected result, and the data factor includes at least one test input parameter corresponding to the to-be-tested function and a plurality of values of each test input parameter. The combination module is configured to combine a plurality of values of the at least one test input parameter to obtain a plurality of data combination results. The generation module is configured to generate a plurality of corresponding test cases in batches based on the action factor and the plurality of data combination results, where the plurality of test cases are used to test the to-be-tested function of the target software product. The display module is configured to display the plurality of generated test cases to a user.

With reference to the second aspect, in some implementations of the second aspect, the obtaining module is specifically configured to obtain, from a test experience library, the action factor and the data factor that correspond to the to-be-tested function.

With reference to the second aspect, in some implementations of the second aspect, the obtaining module is further configured to obtain user-defined information: weights of the values of the test input parameter in the plurality of data combination results, a weight of a value of a combination of a plurality of test input parameters in the plurality of data combination results, a constraint condition corresponding to the test input parameter, or association strength between a plurality of test input parameters; and the combination module is specifically configured to combine the plurality of values of the at least one test input parameter based on at least one of the user-defined information, to obtain the plurality of data combination results.

With reference to the second aspect, in some implementations of the second aspect, the obtaining module is further configured to obtain a combination algorithm selected by the user; and the combination module is specifically configured to combine the plurality of values of the at least one test input parameter based on the combination algorithm, to obtain the plurality of data combination results.

With reference to the second aspect, in some implementations of the second aspect, the combination algorithm includes at least one of the following: all combinations, an each choice combination, a basic choice combination, or a customized N-wise combination.

With reference to the second aspect, in some implementations of the second aspect, the plurality of test cases are generated based on a mind map.

With reference to the second aspect, in some implementations of the second aspect, the apparatus is used in a cloud management platform, the cloud management platform is configured to manage an infrastructure that provides a cloud service, the infrastructure includes at least one cloud data center, and at least one server is disposed in each cloud data center.

According to a third aspect, a compute device is provided, including a processor and a storage, and optionally, further including an input/output interface. The processor is configured to control the input/output interface to send and receive information, the storage is configured to store a computer program, and the processor is configured to invoke the computer program from the storage and run the computer program, to perform the method according to any one of the first aspect or the possible implementations of the first aspect.

Optionally, the processor may be a general-purpose processor, and may be implemented by hardware or software. When the processor is implemented by hardware, the processor may be a logic circuit, an integrated circuit, or the like. When the processor is implemented by software, the processor may be a general-purpose processor, and is implemented by reading software code stored in the storage. The storage may be integrated into the processor, or may be located outside the processor and exist independently.

According to a fourth aspect, a compute device cluster is provided, including at least one compute device. Each compute device includes a processor and a storage. A processor of the at least one compute device is configured to execute instructions stored in a storage of the at least one compute device, to cause the compute device cluster to perform the method according to any one of the first aspect or the possible implementations of the first aspect.

According to a fifth aspect, a chip is provided. The chip obtains instructions and executes the instructions to implement the method according to any one of the first aspect and the implementations of the first aspect.

Optionally, in an implementation, the chip includes a processor and a data interface. The processor reads, through the data interface, instructions stored in a storage, to perform the method according to any one of the first aspect and the implementations of the first aspect.

Optionally, in an implementation, the chip may further include the storage. The storage stores the instructions. The processor is configured to execute the instructions stored in the storage. When the instructions are executed, the processor is configured to perform the method according to any one of the first aspect and the implementations of the first aspect.

According to a sixth aspect, a computer program product including instructions is provided. When the instructions are run by a compute device, the compute device is caused to perform the method according to any one of the first aspect and the implementations of the first aspect.

According to a seventh aspect, a computer program product including instructions is provided. When the instructions are run by a compute device cluster, the compute device cluster is caused to perform the method according to any one of the first aspect and the implementations of the first aspect.

According to an eighth aspect, a computer-readable storage medium is provided, including computer program instructions. When the computer program instructions are executed by a compute device, the compute device performs the method according to any one of the first aspect and the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard drive).

Optionally, in an implementation, the foregoing storage medium may be specifically a non-volatile storage medium.

According to a ninth aspect, a computer-readable storage medium is provided, including computer program instructions. When the computer program instructions are executed by a compute device cluster, the compute device cluster performs the method according to any one of the first aspect and the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard drive).

Optionally, in an implementation, the foregoing storage medium may be specifically a non-volatile storage medium.

### BRIEF DESCRIPTION OF DRAWINGS

FIG. 1 is a diagram of a cloud scenario applied to an embodiment of this application;
FIG. 2 is a schematic flowchart of a method for batch generation of test cases according to an embodiment of this application;
FIG. 3 is a diagram of a structure of generation of a test case based on a mind map according to an embodiment of this application;
FIG. 4 is a diagram of a specific mind map according to an embodiment of this application;
FIG. 5 shows a test case generation interface displayed to a user according to an embodiment of this application;
FIG. 6 is a block diagram of an apparatus 600 for batch generation of test cases according to an embodiment of this application;
FIG. 7 is a diagram of an architecture of a compute device 1500 according to an embodiment of this application;
FIG. 8 is a diagram of an architecture of a compute device cluster according to an embodiment of this application; and
FIG. 9 is a diagram in which compute devices 1500A and 1500B are connected via a network according to an embodiment of this application.

### DESCRIPTION OF EMBODIMENTS

The following describes technical solutions of this application with reference to accompanying drawings.

Aspects, embodiments, or features are presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" and "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may be sometimes used interchangeably. It should be noted that meanings expressed by the terms are consistent when a difference between the terms is not emphasized.

A service scenario described in embodiments of this application is intended to describe the technical solutions in embodiments of this application more clearly, and does not constitute a limitation on the technical solutions provided in embodiments of this application. A person of ordinary skill in the art can learn that the technical solutions provided in embodiments of this application are also applicable to a similar technical problem with evolution of a network architecture and emergence of a new service scenario.

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one item (piece) of the following" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

### 1. Test case (test case)

The test case describes a test task for a specific software product and reflects a test scheme, method, technology, and policy. The test case includes a test objective, a test environment, input data, a test step, an expected result, a test script, and the like, to finally form a document.

The test case mainly includes four parts: a case title, a prerequisite, a test step, and an expected result. The case title mainly describes a to-be-tested function. The prerequisite is a pre-step for executing the test case. The test step mainly describes an operation step during the execution of the test case, which mainly helps test personnel know how to execute the test case. The expected result is a test result expected to be obtained by executing the test case, which is used to guide the test personnel to check whether the test is passed.

The test case is used to check whether the software meets customer requirements, reflect workloads of the test personnel, and present design ideas of the test case. A procedure of writing a test case usually includes requirement analysis, test point extraction, test case design, test case review, and the like. In conclusion, the test case is an important document in software testing, and provides guidance for the test personnel, to ensure that quality and performance of the software product meet expectations.

### 2. Test function

The test function may also be referred to as a test function point, which is to test a specific function of software or a system, to check correctness, stability, and availability of the function.

For example, a test function of an app may include: (a) security testing, for example, testing for a software permission risk in fee deduction and a privacy leakage; (b) detection in terms of input validity verification, authentication, authorization, sensitive data storage, data encryption, and the like; and (c) detection on a user authorization level, data leakage, unauthorized access, and the like of the app.

### 3. Mind map

The mind map is a graphical tool for organizing thoughts and expressing ideas. In the mind map, information, concepts, ideas, and the like are connected by using elements such as graphics, symbols, and colors, to help people better understand and memorize. The mind map usually starts from a central node, and expands the central node into a plurality of branch nodes. Each branch node can be further expanded into more subnodes.

The mind map has the following features.
(a) Clear central node: The mind map uses a central node as a core, with expansion into all subnodes around the central node.
(b) Clear hierarchy: Each node and subnode in the mind map are arranged based on respective importance. Important nodes are arranged in front of subnodes, making the thinking process more organized.
(c) Graphical display: In the mind map, information, concepts, ideas, and the like are connected by using elements such as graphics, symbols, and colors, making the thinking process more intuitive and easier to understand.
(d) Creativity stimulation: The mind map can help people think from different perspectives and stimulate creativity.
(e) Memory improvement: Organizing information into a mind map can help people better memorize and understand the information.

The mind map may be drawn by hand or created using software tools. Hand-drawn mind maps can better express personal thoughts and ideas, while using the software tools can make it easier and faster to create and edit the mind map. Common mind mapping software includes MindManager, XMind, MindNode, and the like. In conclusion, the mind map is an extremely useful thinking tool, which can help people better organize and express their ideas and improve work and learning efficiency.

With the development of science and technology, functions of current products are increasingly complex. When the functions of the products are tested, more test functions are involved. How to ensure completeness of test cases and improve test case generation efficiency becomes urgent.

In an existing test case generation scheme, the test personnel write test cases one by one based on personal experience. The test case process has the following problems.
1. Manual operations by the test personnel are required. The test personnel spend a lot of time in designing the test cases and cannot clearly express correlation between the test cases. As a result, test case generation efficiency is low.
2. Because the process relies on the manual operations of the test personnel, missed testing may occur in the test case design process performed by the test personnel.

In view of this, embodiments of this application provide a method for batch generation of test cases. According to the method, test case generation efficiency can be improved, and missed testing in a test case design process can be avoided.

In a possible implementation, the method provided in embodiments of this application may be applied to a cloud scenario, used as a test case-related product in the cloud scenario, and sold to a user in a form of a cloud service (a cloud service for generating a test case).

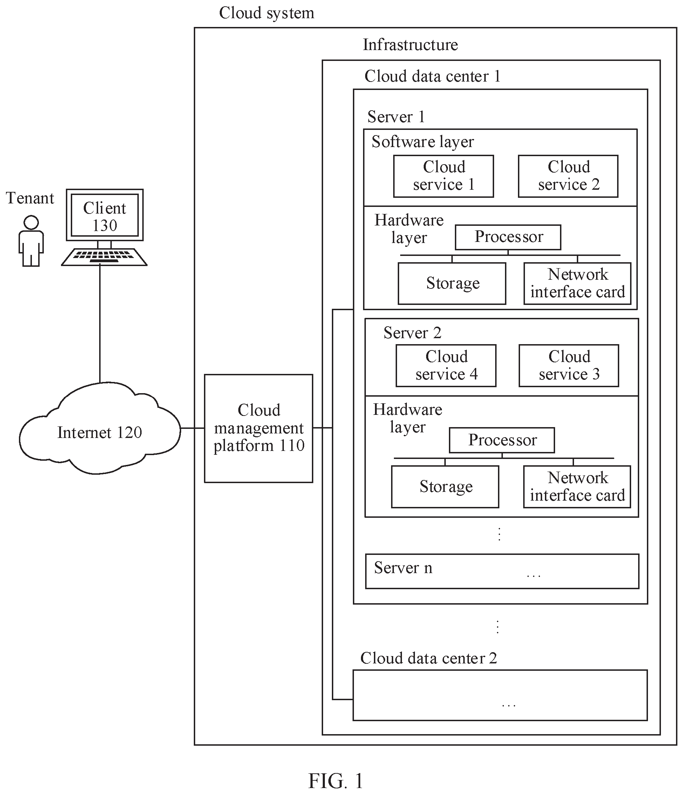

For ease of description, the following first describes the cloud scenario in detail with reference to FIG. 1.

FIG. 1 is a block diagram of a cloud scenario applicable to an embodiment of this application. As shown in FIG. 1, the cloud scenario may include a cloud management platform 110, the internet 120, and a client 130.

As shown in FIG. 1, the cloud management platform 110 is configured to manage an infrastructure that provides a plurality of cloud services. The infrastructure includes a plurality of cloud data centers. Each cloud data center includes a plurality of servers. Each server includes a cloud service resource, to provide a corresponding cloud service for a tenant.

The cloud management platform 110 may be located in the cloud data center, and may provide an access interface (for example, an interface or an application programming interface (application programming interface, API)). The tenant may operate the client 130 to remotely access the access interface, to register a cloud account and password on the cloud management platform 110 and log in to the cloud management platform 110. After the cloud management platform 110 successfully authenticates the cloud account and password, the tenant may further pay on the cloud management platform 110 to select and purchase a virtual machine with a specific specification (a processor, a memory, or a disk). After the payment for purchase succeeds, the cloud management platform 110 provides a remote login account and password of the purchased virtual machine, and the client 130 may remotely log in to the virtual machine, and install and run an application of the tenant in the virtual machine. Therefore, the tenant may create, manage, log in to, and operate the virtual machine in the cloud data center via the cloud management platform 110. The virtual machine may also be referred to as a cloud server (elastic compute service, ECS) or an elastic instance (different cloud service providers have different names).

It should be understood that the tenant of the cloud service may be an individual, an enterprise, a school, a hospital, an administrative agency, or the like.

Functions of the cloud management platform 110 include but are not limited to a user console, a computing management service, a network management service, a storage management service, an authentication service, and an image management service. The user console provides an interface or an API to interact with the tenant. The computing management service is used to manage servers on which a virtual machine and a container are run, and a bare metal server. The network management service is used to manage a network service (for example, a gateway or a firewall). The storage management service is used to manage a storage service (for example, a data bucket service). The authentication service is used to manage a tenant account and password. The image management service is used to manage a virtual machine image. The tenant may use the client 130 to log in to the cloud management platform 110 through the internet 120 to manage a rented cloud service.

In this embodiment of this application, the tenant may further log in to the cloud management platform 110 through the client 130, and pay for, on the cloud management platform 110, a service for generating a test case. After the payment succeeds, the cloud management platform 110 generates the test case for the tenant by performing the method in embodiments of this application on a server of the cloud data center based on the service purchased by the user.

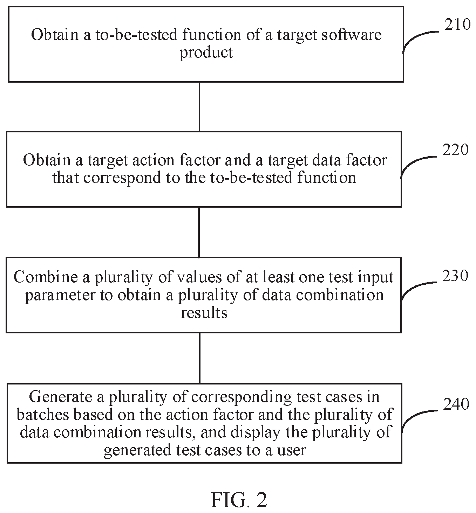

A method for generation of test cases provided in embodiments of this application is first described in detail below with reference to FIG. 2. It should be understood that an example in FIG. 2 is merely intended to help a person skilled in the art understand embodiments of this application, but is not intended to limit embodiments of this application to a specific value or a specific scenario in the example shown in FIG. 2. It is clear that a person skilled in the art may make various equivalent modifications or changes based on the following example provided in FIG. 2, and such modifications and changes also fall within the scope of embodiments of this application.

FIG. 2 is a schematic flowchart of a method for batch generation of test cases according to an embodiment of this application. As shown in FIG. 2, the method may include steps 210 to 240. The following separately describes steps 210 to 240 in detail.

Step 210: Obtain a to-be-tested function of a target software product.

In an example, when designing a test task of the target software product, test personnel (or referred to as users) determine one or more corresponding to-be-tested functions based on the target software product.

For example, the target software product is a mobile phone, and the to-be-tested function may be to test a photographing function of the mobile phone.

Step 220: Obtain a target action factor and a target data factor that correspond to the to-be-tested function.

In this embodiment of this application, the target action factor and the target data factor that correspond to the to-be-tested function may be obtained based on the to-be-tested function of the target software product. The target action factor is used to describe at least one of the following information in a test case: a prerequisite, a test step, and an expected result. The target data factor includes at least one test input parameter corresponding to the to-be-tested function and a plurality of values of each test input parameter.

For example, the to-be-tested function is to test the photographing function of the mobile phone, and the target data factor may include but is not limited to the following test input parameters (or referred to as variables): an exposure mode, a flash mode, an ISO, a pixel, and a scene mode, and values of each test input parameter. The target action factor may be used to describe a prerequisite and a test step for testing the photographing function of the mobile phone. For example, the prerequisite is that the mobile phone provides personalized photographing, and the test step is performing photographing with the pixel set to ***, the flash mode set to ***, the ISO set to ***, the exposure mode set to ***, and the scene mode set to ***.

It should be understood that "***" represents a value of each test input parameter.

There are a plurality of implementations of obtaining the to-be-tested function. This is not specifically limited in this embodiment of this application. The following describes several possible implementations.

In an example, an action factor and a data factor that correspond to the to-be-tested function may be selected from a test experience library based on the to-be-tested function of the target software product. In this implementation, the test experience library needs to be constructed in advance. Specifically, the test experience library is a set of common test design objects, modes, assets, definitions, or constraints that are usually formed by a test manager and other owners by systematically summarizing and extracting related elements in a test design from forward and reverse perspectives. This ensures that the test design is more comprehensive and accurate. Test factors are common factors that affect the test process. For example, test conditions, values, and test operations are extracted as action factors and data factors to implement data and service steering. This promotes repeatability of the test design process, lowers test design difficulties, and greatly improves work efficiency.

For example, the action factor includes but is not limited to: a factor name, a factor number, a factor description, an applicable product, a factor operation, a prerequisite, an expected result, and the like. The data factor includes but is not limited to: a factor name, a factor number, a factor description, an applicable product, a variable name, a valid data value, an invalid data value, and the like.

In another example, if the test experience library does not have an action factor and a data factor that correspond to the test function, a temporary action factor and a temporary data factor may be generated.

Step 230: Combine a plurality of values of the at least one test input parameter to obtain a plurality of data combination results.

In this embodiment of this application, the plurality of values of the at least one test input parameter may be combined to obtain the plurality of data combination results.

In a possible implementation, a combination algorithm selected by the user may be obtained, and the plurality of values of the at least one test input parameter may be combined based on the combination algorithm selected by the user, to obtain the plurality of data combination results.

The combination algorithm has a plurality of implementations. This is not specifically limited in this embodiment of this application. In an example, the combination algorithm may include but is not limited to: all combinations, an each choice combination, a basic choice combination, a customized N-wise combination, and the like. The test personnel may select a corresponding combination algorithm based on an actual test requirement, and combine the values in the obtained data factors based on the selected combination algorithm.

The following describes the several combination algorithms enumerated above.

The all combinations (all combinations, AC) indicates all combinations of all values of each input.

The each choice (each choice, EC) combination indicates that each value of each test input appears at least once in a left-right combination result.

The basic choice (basic choice, BC) combination indicates that a new combination is created by changing a value of an input based on a basic combination.

The customized N-wise combination is a combination mode that covers all combinations of any N inputs. When N is singular, the combination is all combinations. In an example, when N=2, efficiency of generated test data is the highest. Therefore, when N=2, a pairwise combination algorithm is widely applied.

Optionally, in some embodiments, to better fit an actual to-be-tested scenario, this embodiment of this application further provides the following functions for the test personnel to select, to flexibly construct a model of the actual to-be-tested scenario. In other words, in the process of obtaining the plurality of data combination results, information defined by the user may be further combined, so that the generated test case better fits the actual to-be-tested scenario.
1. Weights of values of a data factor may be customized based on an actual business situation.
2. A weight of a value of a combination of a plurality of data factors may be customized based on an actual business situation.
3. A constraint for a data factor may be customized based on an actual business situation.
4. Association strength between a plurality of data factors may be customized based on an actual business situation.

Step 240: Generate a plurality of corresponding test cases in batches based on the action factor and the plurality of data combination results, and display the plurality of generated test cases to the user.

In this embodiment of this application, the plurality of corresponding test cases may be generated in batches based on the action factor and the plurality of data combination results, and the plurality of generated test cases may be displayed to the user. In this way, the user can test the to-be-tested function of the target software product based on the plurality of generated test cases.

In the foregoing technical solution, the test personnel (or referred to as users) may quickly generate test cases in batches based on a combination of the action factor and the data factor, to avoid repeatedly and manually writing test cases for a test function of the software product, thereby significantly improving test case generation efficiency.

In an implementation, the plurality of test cases may be generated based on a mind map. The test generation method provided in embodiments of this application is described in detail below by using an example in which a test case is generated based on a mind map.

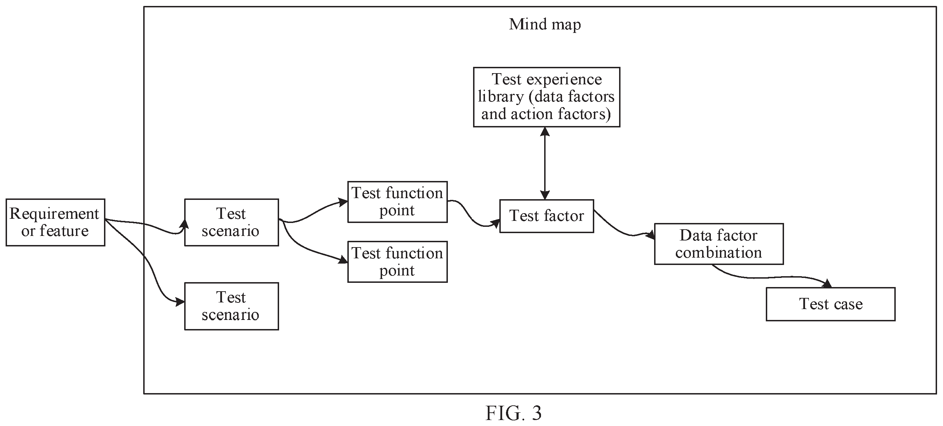

For example, the test case generated based on the mind map can be designed based on a four-layer test design model. Specifically, as shown in FIG. 3, the test personnel may first determine a test scenario based on a requirement, determine a test function based on the test scenario (for example, a target software product), and then select a corresponding action factor and data factor from a test experience library based on the test function. The test personnel may further select, based on an actual test requirement, a combination algorithm provided in this embodiment of this application, combine data factors based on the selected combination algorithm to obtain a combination factor, and finally generate a plurality of test cases in batches based on the action factor and the combination factor. The generated test case mainly includes four parts: a case title, a prerequisite, a test step, and an expected result.

In the foregoing technical solution, the mind map is designed, to support quick construction of a four-layer test design model based on a requirement and a feature: requirement -> test scenario -> test function point -> test case, and support test factor recommendation based on a product feature or test factor customization, so that a test design process performed by the test personnel is more intuitive and convenient, and test design efficiency is effectively improved.

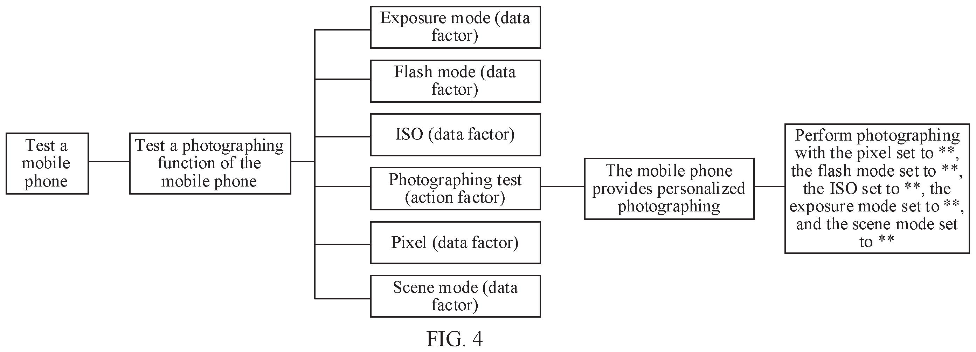

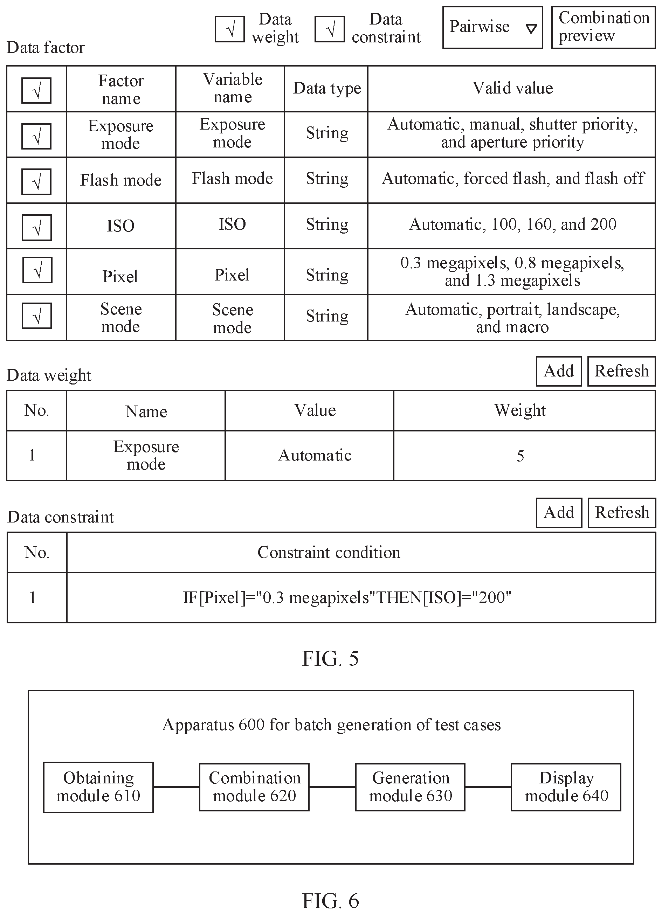

The following describes in detail a specific implementation process of generating the test case based on the mind map with reference to FIG. 4 and FIG. 5 by using an example in which the test scenario is testing a mobile phone and the test function is to test a photographing function of the mobile phone.

It should be understood that examples in FIG. 4 and FIG. 5 are merely intended to help a person skilled in the art understand embodiments of this application, but are not intended to limit embodiments of this application to specific values or specific scenarios in the examples in FIG. 4 and FIG. 5. It is clear that a person skilled in the art may make various equivalent modifications or changes based on the following examples provided in FIG. 4 and FIG. 5, and such modifications and changes also fall within the scope of embodiments of this application.

For example, it is assumed that the test scenario determined by the test personnel based on a requirement is testing a mobile phone. In the mobile phone test scenario, a test function is to test a photographing function of the mobile phone. The test personnel draws a mind map shown in FIG. 4 by hand drawing or by using a software tool. As shown in FIG. 4, the mind map includes two nodes. One node is testing the mobile phone, and the other node is testing the photographing function of the mobile phone. The node for testing the photographing function of the mobile phone is a subnode of the node for testing the mobile phone. After determining that the test function is to test the photographing function of the mobile phone, the test personnel may right-click testing the photographing function of the mobile phone, and obtain a test factor corresponding to the test function from the test experience library. As shown in FIG. 5, it is assumed that the test factor that corresponds to testing the photographing function of the mobile phone and that is selected by the test personnel from the test experience library includes: an exposure mode, a flash mode, an ISO, a photographing test, a pixel, and a scene mode. A type of the test factor named photographing test is an action factor, and types of the other test factors are data factors. After the six test factors corresponding to testing the photographing function of the mobile phone are selected from the test experience library, the six test factors may be displayed on the mind map shown in FIG. 4, and the six test factors are respectively used as six subnodes of the node for testing the photographing function of the mobile phone.

It should be understood that the action factor may also be understood as a test case template, and includes at least one of the following content in the test case: a prerequisite, a test step, an expected result, and the like. In an example, the mind map shown in FIG. 4 is used as an example. The action factor is a photographing test. The action factor may include the prerequisite and the test step in the test case template. The prerequisite is that the mobile phone provides personalized photographing. The test step is that the mobile phone performs photographing with the pixel set to ***, the flash mode set to ***, the ISO set to ***, the exposure mode set to ***, and the scene mode set to ***. "The pixel set to ***, the flash mode set to ***, the ISO set to ***, the exposure mode set to ***, and the scene mode set to ***" are values of the foregoing different data factors.

In this embodiment of this application, after obtaining the mind map shown in FIG. 4, the test personnel may generate a test case based on the mind map. Specifically, the test personnel right-click testing the photographing function of the mobile phone and choose to generate a case, to obtain a case generation interface shown in FIG. 5. Six test factors corresponding to testing the photographing function of the mobile phone are loaded on the interface. The six test factors include an action factor and data factors. The action factor includes the photographing test, and the data factors include the exposure mode, the flash mode, the ISO, the pixel, and the scene mode. Values of the data factor named "exposure mode" include but are not limited to: automatic, manual, shutter priority, and aperture priority. Values of the data factor named "flash mode" include but are not limited to: automatic, forced flash, and flash off. Values of the data factor named "ISO" include but are not limited to: automatic, 100, 160, and 200. Values of the data factor named "pixel" include but are not limited to: 0.3 megapixels, 0.8 megapixels, and 1.3 megapixels. Values of the data factor named "scene mode" include but are not limited to: automatic, portrait, landscape, and macro.

As shown in FIG. 5, the case generation interface provides the following functions for the test personnel: selecting a data factor combination algorithm, customizing a data weight, customizing a data constraint, and the like. For example, it is assumed that the test personnel selects five data factors: the exposure mode, the flash mode, the ISO, the pixel, and the scene mode, and selects a pairwise combination algorithm to combine the five data factors. The test personnel further customize a weight of the data factor named "exposure mode", for example, customize a weight of the data factor that is named "exposure mode" and whose value is "automatic" as 5. The test personnel further customize a data constraint for the data factors named "pixel" and "ISO", for example, customize that if a value of the pixel is 0.3 megapixels, a value of the ISO is 200.

For example, the test personnel may click a "combination preview" button on the case generation interface, to obtain combination results shown in Table 1.

**Table 1 Combination result**

| No. | Combination name | Exposure mode | Flash mode | ISO | Pixel | Scene mode |
|---|---|---|---|---|---|---|
| 1 | Automatic_Automatic_ Automatic_0.8 megapixels_Automatic | Automatic | Automatic | Automatic | 0.8 megapixels | Automatic |
| 2 | Automatic_Forced flash_100_1.3 megapixels_Portrait | Automatic | Forced flash | 100 | 1.3 megapixels | Portrait |
| 3 | Automatic_Flash off_160_1.3 megapixels_Landscape | Automatic | Flash off | 160 | 1.3 megapixels | Landscape |
| 4 | Automatic_Flash off_200_0.3 megapixels_Macro | Automatic | Flash off | 200 | 0.3 megapixels | Macro |
| 5 | Manual_Flash off_Automatic_1.3 megapixels_Portrait | Manual | Flash off | Automatic | 1.3 megapixels | Portrait |
| 6 | Manual_Automatic_10 0_0.8 megapixels_Landscape | Manual | Automatic | 100 | 0.8 megapixels | Landscape |
| 7 | Manual_Forced flash_160_0.8 megapixels_Macro | Manual | Forced flash | 160 | 0.8 megapixels | Macro |
| 8 | Manual_Forced flash_200_0.3 megapixels_Automatic | Manual | Forced flash | 200 | 0.3 megapixels | Automatic |
| 9 | Shutter priority_Forced flash_Automatic_0.8 megapixels_Landscape | Shutter priority | Forced flash | Automatic | 0.8 megapixels | Landscape |
| 10 | Shutter priority_Flash off_100_0.8 megapixels_Macro | Shutter priority | Flash off | 100 | 0.8 megapixels | Macro |
| 11 | Shutter priority_Automatic_16 0_1.3 megapixels_Automatic | Shutter priority | Automatic | 160 | 1.3 megapixels | Automatic |
| 12 | Shutter priority_Automatic_20 0_0.3 megapixels_Portrait | Shutter priority | Automatic | 200 | 0.3 megapixels | Portrait |
| 13 | Aperture priority_Automatic_Au tomatic_1.3 megapixels_Macro | Aperture priority | Automatic | Automatic | 1.3 megapixels | Macro |
| 14 | Aperture priority_Flash off_100_1.3 megapixels_Automatic | Aperture priority | Flash off | 100 | 1.3 megapixels | Automatic |
| 15 | Aperture priority_Forced flash_160_0.8 megapixels_Portrait | Aperture priority | Forced flash | 160 | 0.8 megapixels | Portrait |
| 16 | Aperture priority_Automatic_20 0_0.8 megapixels_Landscape | Aperture priority | Automatic | 200 | 0.8 megapixels | Landscape |
| 17 | Aperture priority_Forced flash_200_0.3 megapixels_Landscape | Aperture priority | Forced flash | 200 | 0.3 megapixels | Landscape |
| 18 | Automatic_Flash off_200_1.3 megapixels_Automatic | Automatic | Flash off | 200 | 1.3 megapixels | Automatic |

In this embodiment of this application, 18 test cases may be generated in batches based on the 18 combination results in Table 1; or the 18 combination results may be screened, to generate a corresponding quantity of test cases based on a screened-out combination result.

For example, the following uses the first eight combinations as an example to separately describe eight correspondingly generated test cases.

### 1. Test case 1 (generated based on the combination result numbered 1):

The test case 1 mainly includes the following several parts:
Case title: Automatic_Automatic_Automatic_0.8 megapixels_Automatic
Design description: Test the photographing function of the mobile phone
Prerequisite: The mobile phone provides the personalized photographing function
Test step: Perform photographing with the exposure mode set to automatic, the flash mode set to automatic, the ISO set to automatic, the pixel set to 0.8 megapixels, and the scene mode set to automatic
Expected result: Successful

### 2. Test case 2 (generated based on the combination result numbered 2):

The test case 2 mainly includes the following several parts:
Case title: Automatic_Forced flash_100_1.3 megapixels_Portrait
Design description: Test the photographing function of the mobile phone
Prerequisite: The mobile phone provides the personalized photographing function
Test step: Perform photographing with the exposure mode set to automatic, the flash mode set to forced flash, the ISO set to 100, the pixel set to 1.3 megapixels, and the scene mode set to portrait
Expected result: Successful

### 3. Test case 3 (generated based on the combination result numbered 3):

The test case 3 mainly includes the following several parts:
Case title: Automatic_Flash off_160_1.3 megapixels_Landscape
Design description: Test the photographing function of the mobile phone
Prerequisite: The mobile phone provides the personalized photographing function
Test step: Perform photographing with the exposure mode set to automatic, the flash mode set to flash off, the ISO set to 160, the pixel set to 1.3 megapixels, and the scene mode set to landscape
Expected result: Successful

### 4. Test case 4 (generated based on the combination result numbered 4):

The test case 4 mainly includes the following several parts:
Case title: Automatic_Flash off_200_0.3 megapixels_Macro
Design description: Test the photographing function of the mobile phone
Prerequisite: The mobile phone provides the personalized photographing function
Test step: Perform photographing with the exposure mode set to automatic, the flash mode set to flash off, the ISO set to 200, the pixel set to 0.3 megapixels, and the scene mode set to macro
Expected result: Successful

### 5. Test case 5 (generated based on the combination result numbered 5):

The test case 5 mainly includes the following several parts:
Case title: Manual_Flash off_Automatic_1.3 megapixels_Portrait
Design description: Test the photographing function of the mobile phone
Prerequisite: The mobile phone provides the personalized photographing function
Test step: Perform photographing with the exposure mode set to manual, the flash mode set to flash off, the ISO set to automatic, the pixel set to 1.3 megapixels, and the scene mode set to portrait
Expected result: Successful

### 6. Test case 6 (generated based on the combination result numbered 6):

The test case 6 mainly includes the following several parts:
Case title: Manual_Automatic_100_0.8 megapixels_Landscape
Design description: Test the photographing function of the mobile phone
Prerequisite: The mobile phone provides the personalized photographing function
Test step: Perform photographing with the exposure mode set to manual, the flash mode set to automatic, the ISO set to 100, the pixel set to 0.8 megapixels, and the scene mode set to landscape
Expected result: Successful

### 7. Test case 7 (generated based on the combination result numbered 7):

The test case 7 mainly includes the following several parts:
Case title: Manual_Forced flash_160_0.8 megapixels_Macro
Design description: Test the photographing function of the mobile phone
Prerequisite: The mobile phone provides the personalized photographing function
Test step: Perform photographing with the exposure mode set to manual, the flash mode set to forced flash, the ISO set to 160, the pixel set to 0.8 megapixels, and the scene mode set to macro
Expected result: Successful

### 8. Test case 8 (generated based on the combination result numbered 8):

The test case 8 mainly includes the following several parts:
Case title: Manual_Forced flash_200_0.3 megapixels_Automatic
Design description: Test the photographing function of the mobile phone
Prerequisite: The mobile phone provides the personalized photographing function
Test step: Perform photographing with the exposure mode set to manual, the flash mode set to forced flash, the ISO set to 200, the pixel set to 0.3 megapixels, and the scene mode set to automatic
Expected result: Successful

In the foregoing technical solution, the test personnel can quickly generate test cases in batches based on an action factor and a data factor that are referenced from the test experience library, to avoid repeated manual writing of test cases at test points, and significantly improve test case generation efficiency. The generated test cases have a unified structure, and are clear and intuitive.

The foregoing describes in detail the method provided in embodiments of this application with reference to FIG. 1 to FIG. 5. The following describes in detail apparatus embodiments in this application with reference to FIG. 6 to FIG. 9. It should be understood that descriptions of the method embodiments correspond to descriptions of the apparatus embodiments. Therefore, for a part that is not described in detail, refer to the foregoing method embodiments.

FIG. 6 is a block diagram of an apparatus 600 for batch generation of test cases according to an embodiment of this application. The apparatus 600 may be implemented by software, hardware, or a combination of software and hardware. The apparatus 600 provided in this embodiment of this application may implement the method procedure shown in FIG. 2 in embodiments of this application. The apparatus 600 includes an obtaining module 610, a combination module 620, a generation module 630, and a display module 640. The obtaining module 610 is configured to obtain a to-be-tested function of a target software product. The obtaining module 610 is further configured to obtain an action factor and a data factor that correspond to the to-be-tested function, where the action factor is used to describe at least one of the following information in a test case: a prerequisite, a test step, and an expected result, and the data factor includes at least one test input parameter corresponding to the to-be-tested function and a plurality of values of each test input parameter. The combination module 630 is configured to combine a plurality of values of the at least one test input parameter to obtain a plurality of data combination results. The generation module 640 is configured to generate a plurality of corresponding test cases in batches based on the action factor and the plurality of data combination results, where the plurality of test cases are used to test the to-be-tested function of the target software product. The display module is configured to display the plurality of generated test cases to a user.

Optionally, the obtaining module 610 is specifically configured to obtain, from a test experience library, the action factor and the data factor that correspond to the to-be-tested function.

Optionally, the obtaining module 610 is further configured to obtain user-defined information: weights of the values of the test input parameter in the plurality of data combination results, a weight of a value of a combination of a plurality of test input parameters in the plurality of data combination results, a constraint condition corresponding to the test input parameter, or association strength between a plurality of test input parameters; and the combination module 620 is specifically configured to combine the plurality of values of the at least one test input parameter based on at least one of the user-defined information, to obtain the plurality of data combination results.

Optionally, the obtaining module 610 is further configured to obtain a combination algorithm selected by the user; and the combination module 620 is specifically configured to combine the plurality of values of the at least one test input parameter based on the combination algorithm, to obtain the plurality of data combination results.

Optionally, the combination algorithm includes at least one of the following: all combinations, an each choice combination, a basic choice combination, or a customized N-wise combination.

Optionally, the plurality of test cases are generated based on a mind map.

Optionally, the apparatus 600 is used in a cloud management platform, the cloud management platform is configured to manage an infrastructure that provides a cloud service, the infrastructure includes at least one cloud data center, and at least one server is disposed in each cloud data center.

The apparatus 600 herein may be embodied in a form of a functional module. The term "module" herein may be implemented in a form of software and/or hardware, and this is not specifically limited.

For example, the "module" may be a software program, a hardware circuit, or a combination thereof that implements the foregoing functions. For example, the following uses the obtaining module 610 as an example to describe an implementation of the obtaining module 610. Similarly, for implementations of other modules, such as the combination module 620, the generation module 630, and the display module 640, refer to the implementation of the obtaining module 610.

The obtaining module 610 is used as an example of a software functional unit, and the obtaining module 610 may include code running on a computing instance. The computing instance may include at least one of a physical host (compute device), a virtual machine, and a container. Further, there may be one or more computing instances. For example, the obtaining module 610 may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is disposed in one region. A communication gateway needs to be disposed in each VPC for communication between two VPCs in a same region and cross-region communication between VPCs in different regions. The VPCs are interconnected through the communication gateway.

The obtaining module 610 is used as an example of a hardware functional unit, and the obtaining module 610 may include at least one compute device, for example, a server. Alternatively, the obtaining module 610 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the obtaining module 610 may be distributed in a same region, or may be distributed in different regions. The plurality of compute devices included in the obtaining module 610 may be distributed in a same AZ, or may be distributed in different AZs. Similarly, the plurality of compute devices included in the obtaining module 610 may be distributed on a same VPC, or may be distributed on a plurality of VPCs. The plurality of compute devices may be any combination of compute devices such as a server, an ASIC, a PLD, a CPLD, an FPGA, and GAL.

Therefore, modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that when the apparatus provided in the foregoing embodiment performs the foregoing method, division into the foregoing functional modules is merely used as an example for description. During actual application, the foregoing functions may be allocated as required to different functional modules for implementation, that is, an internal structure of the apparatus is divided into different functional modules to implement all or some of the functions described above. For example, the obtaining module 610 may be configured to perform any step in the foregoing method, the combination module 620 may be configured to perform any step in the foregoing method, the generation module 630 may be configured to perform any step in the foregoing method, and the display module 640 may be configured to perform any step in the foregoing method. Steps implemented by the obtaining module 610, the combination module 620, the generation module 630, and the display module 640 may be specified as required. The obtaining module 610, the combination module 620, the generation module 630, and the display module 640 separately implement different steps in the foregoing method to implement all functions of the apparatus.

In addition, the apparatus provided in the foregoing embodiment and the method embodiments belong to a same concept. For a specific implementation process thereof, refer to the method embodiments. Details are not described herein again.

The method provided in embodiments of this application may be performed by a compute device, and the compute device may also be referred to as a computer system. The compute device includes a hardware layer, an operating system layer running above the hardware layer, and an application layer running above the operating system layer. The hardware layer includes a processing unit, a memory, a memory control unit, and the like. Subsequently, functions and structures of the hardware are described in detail. An operating system is any one or more computer operating systems that implement service processing through a process (process), for example, a Linux operating system, a Unix operating system, an Android operating system, an iOS operating system, or a Windows operating system. The application layer includes a browser, an address book, word processing software, instant messaging software, and the like. In addition, optionally, the computer system is a handheld device, for example, a smartphone, or a terminal device, for example, a personal computer. This is not particularly limited in this application, provided that the method provided in embodiments of this application can be implemented. The method provided in embodiments of this application may be performed by the compute device or a functional module that is in the compute device and that can invoke and execute a program.

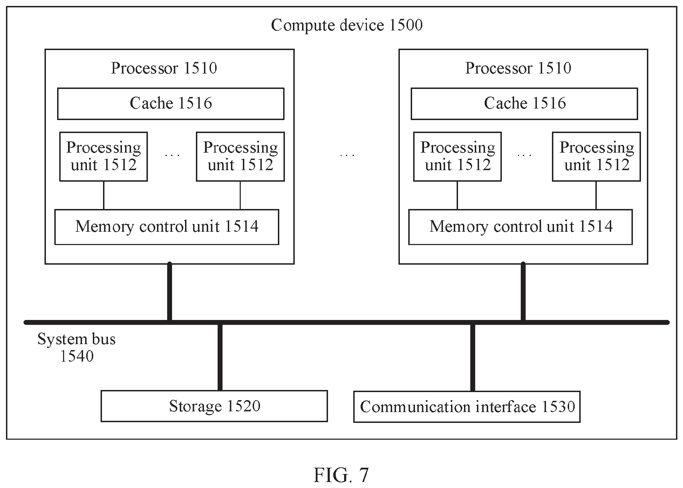

A compute device according to an embodiment of this application is described below in detail with reference to FIG. 7.

FIG. 7 is a diagram of an architecture of a compute device 1500 according to an embodiment of this application. The compute device 1500 may be a server, a computer, or another device with a computing capability. The compute device 1500 shown in FIG. 7 includes at least one processor 1510 and a storage 1520.

It should be understood that a quantity of processors and a quantity of storages in the compute device 1500 are not limited in this application.

The processor 1510 executes instructions in the storage 1520, to cause the compute device 1500 to implement the method provided in this application. Alternatively, the processor 1510 executes the instructions in the storage 1520, to cause the compute device 1500 to implement the functional modules provided in this application, to implement the method provided in this application.

Optionally, the compute device 1500 further includes a communication interface 1530. The communication interface 1530 uses a transceiver module, for example, but not limited to, a network interface card or a transceiver, to implement communication between the compute device 1500 and another device or a communication network.

Optionally, the compute device 1500 further includes a system bus 1540. The processor 1510, the storage 1520, and the communication interface 1530 are separately connected to the system bus 1540. The processor 1510 can access the storage 1520 through the system bus 1540. For example, the processor 1510 can read and write data or execute code in the storage 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, or the like. For ease of representation, only one bold line is used for representation in FIG. 7, but this does not mean that there is only one bus or only one type of bus.

In a possible implementation, a function of the processor 1510 is mainly to interpret instructions (or code) of a computer program and process data in computer software. The instructions of the computer program and the data in the computer software may be stored in the storage 1520 or a cache 1516.

Optionally, the processor 1510 may be an integrated circuit chip and has a signal processing capability. By way of example and not limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware assembly. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is the most important component of the processor. The processing unit 1512 is made of monocrystalline silicon through a specific production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction-level unit, and a bus interface.

In an implementation example, the memory control unit 1514 is configured to control data exchange between the storage 1520 and the processing unit 1512. Specifically, the memory control unit 1514 receives a memory access request from the processing unit 1512, and controls access to a memory based on the memory access request. By way of example and not limitation, the memory control unit is a memory management unit (memory management unit, MMU) or the like.

In an implementation example, each memory control unit 1514 performs addressing for the storage 1520 through the system bus. In addition, an arbiter (not shown in FIG. 7) is configured in the system bus, and the arbiter is responsible for processing and coordinating contention-based access of a plurality of processing units 1512.

In an implementation example, the processing unit 1512 is in communication connection with the memory control unit 1514 through a connection line inside a chip, for example, an address line, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for required data. If the required data is found, the processing unit 1512 directly reads the data. If the required data is not found, the processing unit 1512 searches the storage for the required data. Because the cache runs much faster than the storage, a function of the cache is to help the processing unit 1512 run faster.

The storage 1520 can provide running space for a process in the compute device 1500. For example, the storage 1520 stores a computer program (specifically, code of the program) for generating the process. After the computer program is run by the processor to generate the process, the processor allocates corresponding storage space to the process in the storage 1520. Further, the storage space further includes a text segment, an initial data segment, an uninitialized data segment, a stack segment, a heap segment, and the like. The storage 1520 stores, in the storage space corresponding to the process, data generated during running of the process, for example, intermediate data or process data.

Optionally, the storage is also referred to as a memory, and is configured to temporarily store operation data in the processor 1510 and data exchanged with an external storage, for example, a hard disk. Provided that the computer runs, the processor 1510 schedules, to the memory for an operation, data on which the operation needs to be performed, and the processing unit 1512 sends a result after the operation is completed.

By way of example and not limitation, the storage 1520 is a volatile memory or a non-volatile memory, or may include both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM) and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the storage 1520 in the system and method described in this specification is intended to include but is not limited to these storages and any storage of another proper type.

The enumerated structure of the compute device 1500 is merely an example for description, and this application is not limited thereto. The compute device 1500 in this embodiment of this application includes various types of hardware in a computer system in the conventional technology. For example, the compute device 1500 further includes a storage other than the storage 1520, for example, a magnetic disk storage. A person skilled in the art should understand that the compute device 1500 may further include another component required for implementing normal running. In addition, a person skilled in the art should understand that, based on a specific requirement, the compute device 1500 may further include a hardware component implementing another additional function. In addition, a person skilled in the art should understand that the compute device 1500 may alternatively include only a component necessary for implementing embodiments of this application, and does not necessarily include all the components shown in FIG. 7.

An embodiment of this application further provides a compute device cluster. The compute device cluster includes at least one compute device. The compute device may be a server. In some embodiments, the compute device may alternatively be a terminal device, for example, a desktop computer, a notebook computer, or a smartphone.

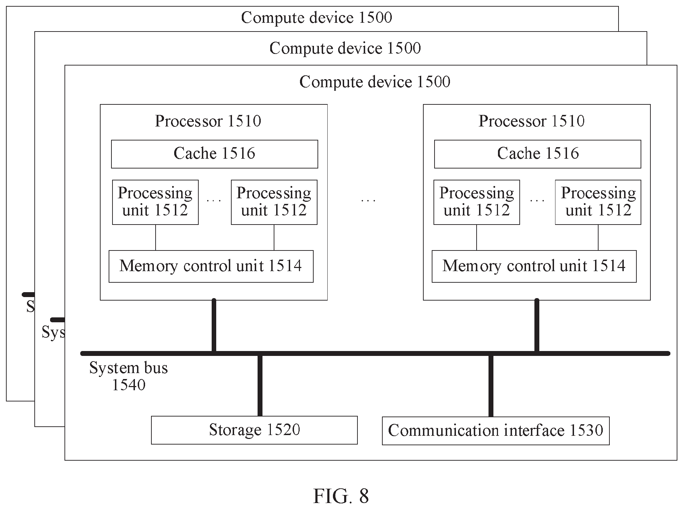

As shown in FIG. 8, the compute device cluster includes at least one compute device 1500. Storages 1520 in one or more compute devices 1500 in the compute device cluster may store same instructions for performing the foregoing method.

In some possible implementations, the storages 1520 in the one or more compute devices 1500 in the compute device cluster may alternatively store some instructions for performing the foregoing method separately. In other words, a combination of the one or more compute devices 1500 may jointly execute the instructions of the foregoing method.

It should be noted that the storages 1520 in different compute devices 1500 in the compute device cluster may store different instructions respectively used to perform some functions of the foregoing apparatus. In other words, the instructions stored in the storages 1520 in different compute devices 1500 may implement functions of one or more modules in the foregoing apparatus.

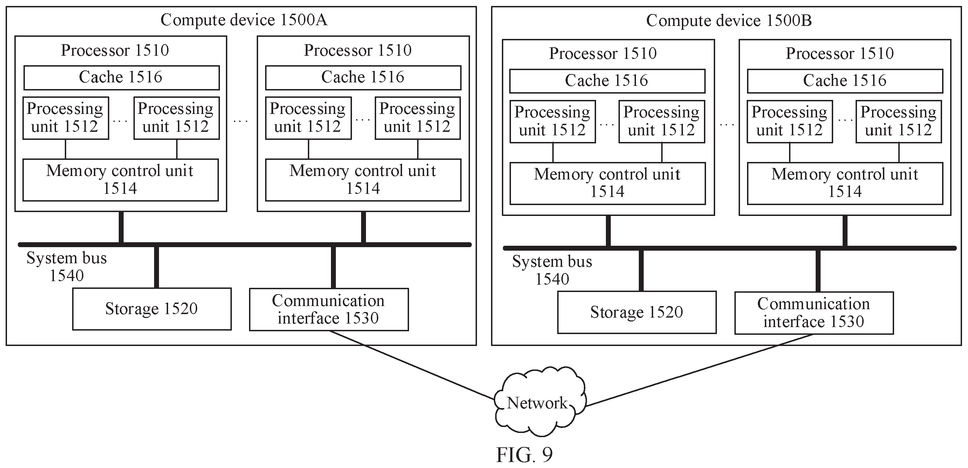

In some possible implementations, the one or more compute devices in the compute device cluster may be connected via a network. The network may be a wide area network, a local area network, or the like. FIG. 9 shows a possible implementation. As shown in FIG. 9, two compute devices 1500A and 1500B are connected via a network. Specifically, each compute device is connected to the network through a communication interface in the compute device.

It should be understood that functions of the compute device 1500A shown in FIG. 9 may alternatively be completed by a plurality of compute devices 1500. Similarly, functions of the compute device 1500B may alternatively be completed by a plurality of compute devices 1500.

An embodiment further provides a computer program product including instructions. The computer program product may be software or a program product that includes instructions and that can run on a compute device or that is stored in any usable medium. When the computer program product runs on the compute device, the compute device is caused to perform the method provided above, or the compute device is caused to implement functions of the apparatus provided above.

An embodiment further provides a computer-readable storage medium. The computer-readable storage medium may be any usable medium that can be stored by a compute device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed on the compute device, the compute device is caused to perform the method provided above.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for causing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for batch generation of test cases, wherein the method comprises:
obtaining a to-be-tested function of a target software product;
obtaining an action factor and a data factor that correspond to the to-be-tested function, wherein the action factor is used to describe at least one of the following information in a test case: a prerequisite, a test step, and an expected result, and the data factor comprises at least one test input parameter corresponding to the to-be-tested function and a plurality of values of each test input parameter;
combining a plurality of values of the at least one test input parameter to obtain a plurality of data combination results;
generating a plurality of corresponding test cases in batches based on the action factor and the plurality of data combination results, wherein the plurality of test cases are used to test the to-be-tested function of the target software product; and
displaying the plurality of generated test cases to a user.

2. The method according to claim 1, wherein the obtaining the action factor and the data factor that correspond to the to-be-tested function comprises:
obtaining, from a test experience library, the action factor and the data factor that correspond to the to-be-tested function.

3. The method according to claim 1 or 2, wherein the method further comprises:
obtaining user-defined information: weights of the values of the test input parameter in the plurality of data combination results, a weight of a value of a combination of a plurality of test input parameters in the plurality of data combination results, a constraint condition corresponding to the test input parameter, or association strength between a plurality of test input parameters; and
the combining the plurality of values of the at least one test input parameter to obtain the plurality of data combination results comprises:
combining the plurality of values of the at least one test input parameter based on at least one of the user-defined information, to obtain the plurality of data combination results.

4. The method according to any one of claims 1 to 3, wherein the method further comprises:
obtaining a combination algorithm selected by the user; and
the combining the plurality of values of the at least one test input parameter to obtain the plurality of data combination results comprises:
combining the plurality of values of the at least one test input parameter based on the combination algorithm, to obtain the plurality of data combination results.

5. The method according to claim 4, wherein the combination algorithm comprises at least one of the following: all combinations, an each choice combination, a basic choice combination, or a customized N-wise combination.

6. The method according to any one of claims 1 to 5, wherein the plurality of test cases are generated based on a mind map.

7. The method according to any one of claims 1 to 6, wherein the method is applied to a cloud management platform, the cloud management platform is configured to manage an infrastructure that provides a cloud service, the infrastructure comprises at least one cloud data center, and at least one server is disposed in each cloud data center.

8. An apparatus for batch generation of test cases, wherein the apparatus comprises:
an obtaining module, configured to obtain a to-be-tested function of a target software product, wherein
the obtaining module is further configured to obtain an action factor and a data factor that correspond to the to-be-tested function, wherein the action factor is used to describe at least one of the following information in a test case: a prerequisite, a test step, and an expected result, and the data factor comprises at least one test input parameter corresponding to the to-be-tested function and a plurality of values of each test input parameter;
a combination module, configured to combine a plurality of values of the at least one test input parameter to obtain a plurality of data combination results;
a generation module, configured to generate a plurality of corresponding test cases in batches based on the action factor and the plurality of data combination results, wherein the plurality of test cases are used to test the to-be-tested function of the target software product; and
a display module, configured to display the plurality of generated test cases to a user.

9. The apparatus according to claim 8, wherein the obtaining module is specifically configured to:
obtain, from a test experience library, the action factor and the data factor that correspond to the to-be-tested function.

10. The apparatus according to claim 8 or 9, wherein
the obtaining module is further configured to obtain user-defined information: weights of the values of the test input parameter in the plurality of data combination results, a weight of a value of a combination of a plurality of test input parameters in the plurality of data combination results, a constraint condition corresponding to the test input parameter, or association strength between a plurality of test input parameters; and
the combination module is specifically configured to:
combine the plurality of values of the at least one test input parameter based on at least one of the user-defined information, to obtain the plurality of data combination results.

11. The apparatus according to any one of claims 8 to 10, wherein
the obtaining module is further configured to obtain a combination algorithm selected by the user; and
the combination module is specifically configured to:
combine the plurality of values of the at least one test input parameter based on the combination algorithm, to obtain the plurality of data combination results.

12. The apparatus according to claim 11, wherein the combination algorithm comprises at least one of the following: all combinations, an each choice combination, a basic choice combination, or a customized N-wise combination.

13. The apparatus according to any one of claims 8 to 12, wherein the plurality of test cases are generated based on a mind map.

14. The apparatus according to any one of claims 8 to 13, wherein the apparatus is used in a cloud management platform, the cloud management platform is configured to manage an infrastructure that provides a cloud service, the infrastructure comprises at least one cloud data center, and at least one server is disposed in each cloud data center.

15. A compute device cluster, comprising at least one compute device, wherein each compute device comprises a processor and a storage; and
a processor of the at least one compute device is configured to execute instructions stored in a storage of the at least one compute device, to cause the compute device cluster to perform the method according to any one of claims 1 to 7.

16. A computer program product comprising instructions, wherein when the instructions are run by a compute device cluster, the compute device cluster is caused to perform the method according to any one of claims 1 to 7.

17. A computer-readable storage medium, comprising computer program instructions, wherein when the computer program instructions are executed by a compute device cluster, the compute device cluster performs the method according to any one of claims 1 to 7.
